# EUROPEAN PATENT APPLICATION

(11) **EP 4 840 587 A1**
(43) Date of publication of application: **18.11.2026**
(21) Application number: 25738266.3
(22) Date of filing: 08.01.2025
(51) Int. Cl.: B25B 21/00, B25B 23/10, B25B 23/147, G05B 19/045

(54) **TORQUE TOOL**

(30) Priority: 09.01.2024 BR 102024000444
(71) Applicant: Petroleo Brasileiro S.A. - PETROBRAS, 20031-912 Rio de Janeiro (BR)
(72) Inventor: PEREIRA FERREIRA, Roberto, 20231-030 Rio de Janeiro (BR); RAMOS GONZAGA, Renato, 20231-030 Rio de Janeiro (BR)
(74) Representative: Clarke, Modet y Cía., S.L.
(86) International application number: PCT/BR2025/050004
(87) International publication number: WO 2025/147750

(57) **Abstract**

The present invention discloses a bidirectional torque wrench tool (10) comprising: a waterproof housing (12); a spindle (14); an anti-rotation plate (16); a rotating assembly (18); and a hydraulic drive assembly (20). The spindle (14), in turn, is formed by a hexagonal end and a cylindrical end (32) with horizontal splines, and can be actuated by the hydraulic drive assembly (20) or directly by means of the hexagonal end (30) thereof. Regarding the rotating assembly (18), this comprises: a cogwheel (50); and a grooved sleeve (52) that is coupled to the cogwheel (50) to receive the cylindrical end (32) of the spindle (14). Furthermore, the hydraulic drive assembly (20) comprises: a main cylinder (60); an auxiliary cylinder (62); and a spring (64). Thus, the main cylinder (60) is responsible for applying the force necessary to rotate the cogwheel (50), and the auxiliary cylinder (62) is responsible for raising the tip of the main cylinder (60) to initiate a new torque application cycle, being actuated by a programmable logic controller (PLC).

## Description

### FIELD OF THE INVENTION

The present invention relates to a hydraulic torque wrench capable of generating torque in both directions of rotation, eliminating the need to reposition the tool to change the direction of movement. The invention combines hydraulic and mechanical mechanisms to provide a refined control over the rotation and torque applied to screws, rods, nuts and other fastening elements, especially for operation in a subsea environment, being operable by a remotely operated vehicle (ROV).

### BACKGROUNDS OF THE INVENTION

Currently, the maintenance and installation procedures in a subsea environment make use of a unidirectional torque wrench. This type of approach can be complex due to the limitations of this type of tool and the intrinsic environmental difficulties. Generally, the unidirectional torque wrenches require physical repositioning to change the direction of torque, which can be challenging and time-consuming in underwater environments.

To reverse the direction of torque, the unidirectional torque wrench needs to be removed and repositioned manually or with the use of an ROV. This is time-consuming and can be complicated to perform due to the complexity of the subsea operations.

In this way, the bidirectional hydraulic torque wrench tool of the present invention solves these problems by allowing the torque application in both directions without the need to reposition the tool. This is possible due to the combination of hydraulic and mechanical mechanisms that offer refined control over the direction of the rotational movement, providing greater efficiency, precision, and versatility in various industrial applications, especially in subsea environments and remote operations.

### STATE OF THE ART

Some documents of the state of the art disclose technologies that fall within the same objective as the present invention, but which still have unresolved deficiencies.

Document PT97723A describes a device for applying torque, mentioning that it provides both torque and loosening forces, using only one set of cylinders and without turning the torque wrench, and for this, it uses a new means of rotating the direction of force application of the cylinders. Each cylinder is pivotable so that its piston is able to rest on two different legs of the four-legged ratchet mechanism, for example, a first and a second leg associated with each cylinder. A rotating ring, driven by the drive gear, engages the cylinders which are pivotally mounted on the front and rear members of the structure. By rotating the drive gear, the cylinders can be rotated ninety degrees to rest on the second leg associated with the four-legged ratchet mechanism located ninety degrees away from the first leg and thus transmit force and therefore torque in the opposite direction.

Document US6553873BB describes a wrench assembly including a drive head and a socket attached for engaging a bolt or nut. When the drive head rotates, the socket and any engaged threaded element will also rotate. A hydraulic motor and cylinder are also included. The hydraulic motor and cylinder cause the drive head and socket to rotate independently of each other. Typically, the hydraulic motor will cause the drive head to rotate faster than the cylinder, but with lower torques. Thus, the hydraulic motor will rotate the threaded element until it is tight, and then the hydraulic cylinder will tighten the threaded element to the desired torque. Alternatively, the hydraulic cylinder may loosen the threaded element when it is tight. The hydraulic motor will then rotate the loosened threaded element outward. Finally, the wrench assembly includes a hydraulic fluid distribution system, including one or more valves that regulate the flow of hydraulic fluid through the wrench assembly.

Although the listed documents of the state of the art disclose tightening mechanisms for fastening elements, none of them come close to the present invention, as they fail to describe a tool capable of performing a bidirectional operation without the need to reposition the tool, overcoming the limitation of the conventional torque wrenches that operate unidirectionally. This enables resident applications, eliminating complexity and delays in operations, especially in subsea environments or in situations that demand precise and agile maintenance.

### BRIEF DESCRIPTION OF THE INVENTION

The present invention discloses a bidirectional torque wrench tool comprising: a waterproof housing; a spindle; an anti-rotation plate; a rotating assembly; and a hydraulic drive assembly.

The waterproof housing has a main base with a hole and a cylindrical structure that has two holes to receive the anti-rotation plate.

It should be highlighted that the cylindrical structure has a hole in the central region thereof to receive the spindle. The spindle, in turn, is formed by a hexagonal end and a cylindrical end with horizontal splines, and can be driven by the hydraulic drive assembly or directly through the hexagonal end thereof.

Additionally, the anti-rotation plate can be positioned in two ways: to block the spindle rotation, when the tool is configured for hydraulic drive; and to release the spindle rotation, when the tool is configured for direct drive.

Regarding the rotating assembly, this comprises a cogwheel and a splined sleeve that is coupled to the cogwheel to receive the cylindrical end of the spindle. Furthermore, the hydraulic drive assembly comprises a main cylinder, an auxiliary cylinder, and a spring. Thus, the main cylinder is responsible for applying the force necessary to rotate the cogwheel, and the auxiliary cylinder is responsible for raising the tip of the main cylinder to initiate a new torque application cycle, being actuated by a programmable logic controller (PLC).

### BRIEF DESCRIPTION OF THE FIGURES

To assist in identifying the main features of the present invention, the figures to which reference is made are presented as follows:
Figure 1 illustrates the internal and external components of the bidirectional torque wrench tool of the present invention.
Figure 2 illustrates the waterproof housing that protects the internal components of the tool.
Figure 3 illustrates the spindle of the bidirectional torque wrench tool of the present invention.
Figure 4 illustrates the anti-rotation plate (16).
Figure 5 illustrates the rotating assembly of the bidirectional torque wrench tool of the present invention.
Figure 6 illustrates the hydraulic drive assembly of the bidirectional torque wrench tool of the present invention.
Figure 7 presents an example of the operation of the hydraulic drive assembly of the present invention in both directions.
Figure 8 illustrates an exemplary embodiment of the hydraulic assembly driving by means of a PLC.

### DETAILED DESCRIPTION OF THE INVENTION

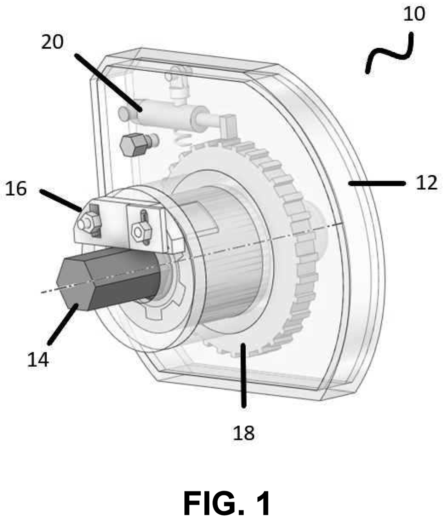

Figure 1 of the present application illustrates a representation of the internal and external components of the bidirectional torque wrench tool (10) of the present invention. This tool aims to generate torque through the rotation of a cogwheel, which can be rotated in both directions by means of the controlled action of two hydraulic cylinders or directly by means of the hexagonal end of the spindle.

In this sense, the bidirectional torque wrench tool (10) comprises the following structures: waterproof housing (12); spindle (14); anti-rotation plate (16); rotating assembly (18); and hydraulic drive assembly (20).

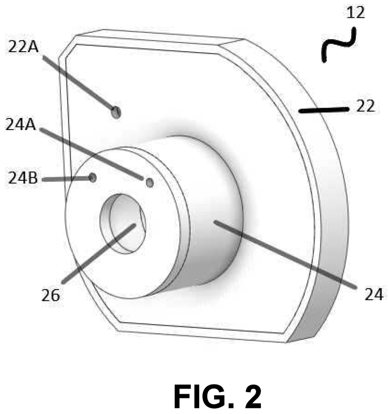

The waterproof housing (12) can be observed in more detail from Figure 2. The waterproof housing (12) is a structure that houses and protects the internal components of the bidirectional torque wrench tool (10), ensuring its integrity in subsea environments.

The waterproof housing (12) has a main base (22) and a cylindrical structure (24). The main base (22) has a hole (22A) where a screw is inserted that would act as an eccentric, which would keep the cylinder raised, leaving the cogwheel unlocked. In turn, the cylindrical structure (24) has two holes (24A, 24B) to receive the anti-rotation plate (16) and a hole (26) in the central region thereof to receive the spindle (14).

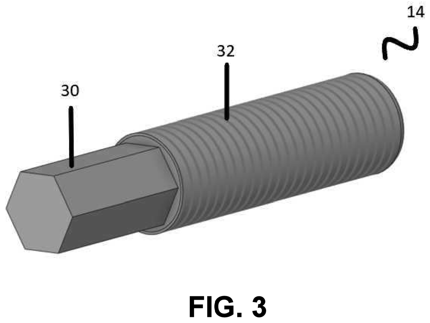

The spindle (14), in turn, plays a crucial role in transmitting the movement to apply torque to the fastening elements. As can be seen in figure 3, the spindle is formed by a hexagonal end (30) and a cylindrical end (32) with horizontal splines. The spindle (14) can be driven by the hydraulic drive assembly (20) or directly by means of the hexagonal end (30) thereof, according to the operating mode defined by the anti-rotation plate (16).

The bidirectional torque wrench tool (10) can operate in two modes: hydraulic drive and direct drive. When the torque wrench is set to hydraulic drive, the anti-rotation plate (16) is positioned in order to block the rotation of the spindle (14). This means that, during the hydraulic drive, the plate prevents the rotational movement of the spindle (14), allowing only the axial displacement. This blocking is crucial to ensure that the spindle moves only in the desired direction, without rotating, during the hydraulic drive.

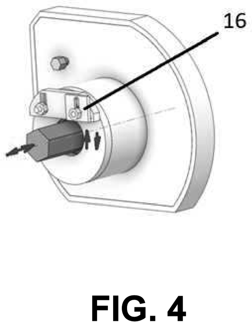

When it is necessary to change to the direct drive of the spindle via the hexagonal end (30) thereof, the anti-rotation plate (16) is reconfigured or repositioned, as can be seen in more detail in Figure 4. This allows the plate to release the spindle rotation blocking, allowing it to rotate freely in response to the new way of driving. The plate prevents the screw from rotating, but allows the axial movement. In the hydraulic mode, the cogwheel rotates, but the screw does not rotate due to the anti-rotation plate. Thus, the screw moves axially forward or backward due to the rotation of the cogwheel with its internal thread. The screw acts as a spindle and the cogwheel as a nut.

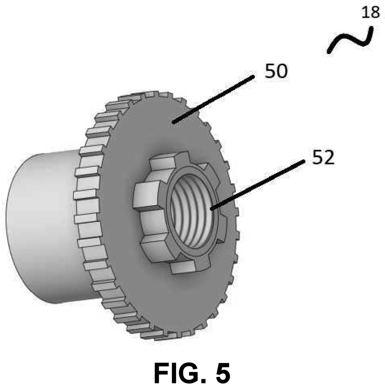

Figure 5 illustrates the rotating assembly (18) which, in turn, consists of a cogwheel (50) and a splined sleeve (52). The cogwheel (50) is responsible for transmitting the movement from the hydraulic drive assembly (20) to the spindle (14), which is coupled to the splined sleeve (52) by means of the cylindrical end (32) thereof.

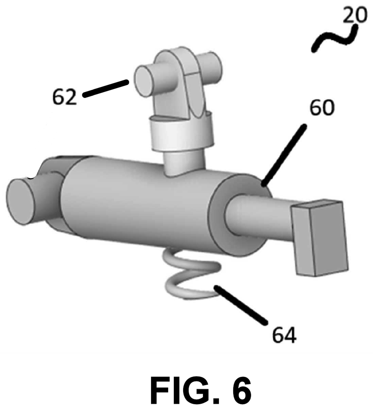

The hydraulic drive assembly (20) is responsible for generating the movement necessary to apply torque to the fastening elements, and is depicted in more detail in Figure 6.

In this sense, the aforementioned hydraulic drive assembly (20) consists of components that work together to control the rotation of the spindle (14), namely: main cylinder (60); auxiliary cylinder (62); and spring (64).

The main cylinder (60) is responsible for applying the force necessary to rotate the cogwheel (50), transmitting the movement to the spindle. It acts by pulling or pushing the teeth of the cogwheel (50), initiating and maintaining the rotation as needed to apply torque to the fastening elements. The controlled movement of this cylinder allows the torque wrench to operate bidirectionally, enabling the application of torque in both clockwise and counterclockwise directions.

In turn, the auxiliary cylinder (62) has the function of raising the tip of the main cylinder (60), allowing it to move to find the next tooth of the cogwheel, ensuring a continuous rotational movement.

A spring (64) is incorporated to ensure the proper return of the cylinders to their initial position after the application of torque. This is essential to prepare the tool for the next torque application cycle, keeping the tool ready to perform new tightening or loosening operations.

The hydraulic drive assembly (20) is controlled by an automated system. In an exemplary embodiment, a Programmable Logic Controller (PLC) coordinates the movement in the cylinders.

When driven, the main cylinder (60) initiates the movement, pulling or pushing the teeth of the cogwheel to apply the necessary torque. The auxiliary cylinder (62) works in synchrony with the main cylinder (60), raising the tip of the main cylinder (60) to allow a smooth and continuous displacement during the rotation of the cogwheel.

After the torque application cycle is complete, the spring (64) helps restore the cylinders to their initial position, preparing the system to initiate the next cycle and repeat the procedure according to the direction of rotation demanded by the PLC.

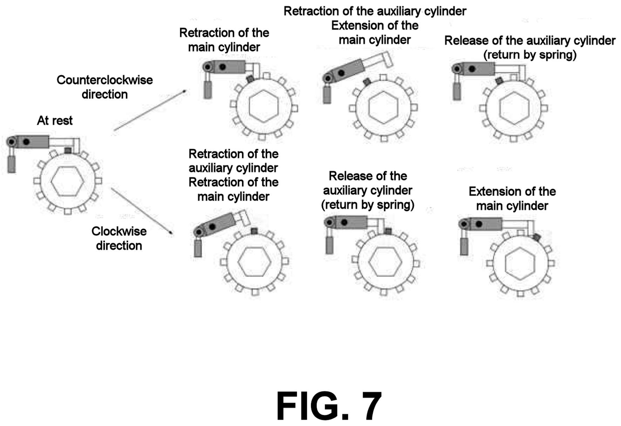

Figure 7 presents an example of the operation of the hydraulic drive assembly (20), both clockwise and counterclockwise, starting from a rest position.

In the counterclockwise direction, it can be seen that the assembly follows these steps: retraction of the main cylinder; retraction of the auxiliary cylinder and extension of the main cylinder; and release of the auxiliary cylinder and return of the assembly by the action of a spring. In this case, the hydraulic drive assembly (20) pulls the teeth of the cogwheel at each torque application cycle.

For the clockwise direction, the following steps are followed: retraction of the auxiliary cylinder and retraction of the main cylinder; release of the auxiliary cylinder and return of the assembly by the action of a spring; and extension of the main cylinder. In this case, the hydraulic drive assembly (20) pushes the teeth of the cogwheel at each torque application cycle.

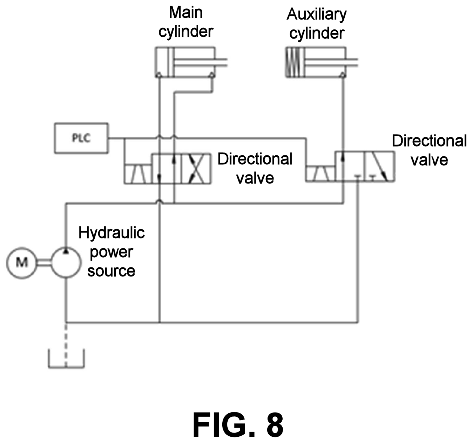

The arrangement between the PLC and the main and auxiliary cylinders is detailed in Figure 8. In this circuit, the PLC is connected to two directional valves, each connected to one of the cylinders (auxiliary and main) and to the hydraulic power source. The PLC receives and processes control instructions. It determines when and how the cylinders should be actuated to apply torque to the fastening elements. Each directional valve controls the flow of hydraulic fluid to a specific cylinder (main cylinder and auxiliary cylinder). The directional valves are switched by the PLC to direct the flow of hydraulic fluid according to the programmed instructions.

When the PLC receives a signal to apply torque in a certain direction, it sends commands to the corresponding directional valves. The directional valve connected to the main cylinder is actuated by the PLC, allowing the hydraulic fluid to be directed to the main cylinder. Simultaneously, the other directional valve connected to the auxiliary cylinder is adjusted to coordinate the auxiliary movement needed to ensure the smooth operation of the main cylinder.

With hydraulic pressure directed to the correct cylinders, the movement is initiated. The main cylinder applies the necessary torque while the auxiliary cylinder assists in the process by raising the tip of the main cylinder to allow a continuous and efficient movement.

Once torque is applied as needed, the PLC adjusts the directional valves to stop the flow of hydraulic fluid to the cylinders, ceasing the movement and preparing the system for the next operating cycle.

This PLC-controlled hydraulic circuit, through the directional valves, enables the precise and coordinated actuation of the cylinders to apply torque in both directions according to the programmed instructions, allowing an efficient and controlled operation of the bidirectional hydraulic torque wrench.

By allowing the precise and independent control of each cylinder through the PLC, the bidirectional operation becomes feasible without the need to reposition the tool, overcoming the limitation of the conventional torque wrenches that operate unidirectionally. This enables resident applications, eliminating complexity and delays in operations, especially in subsea environments or in situations that demand precise and agile maintenance. This solution promotes a more versatile and efficient application, facilitating the execution of tightening and loosening tasks of fastening elements in both directions, without the need for interruptions to reposition the tool.

## Claims

1. A bidirectional torque wrench tool (10) **characterized in that** it comprises:
a waterproof housing (12);
a spindle (14);
an anti-rotation plate (16);
a rotating assembly (18); and
a hydraulic drive assembly (20).

2. The bidirectional torque wrench tool (10) according to claim 1, **characterized in that** the waterproof housing (12) comprises:
a main base (22) with a hole (22A); and
a cylindrical structure (24) having two holes (24A, 24B) to receive the anti-rotation plate (16), wherein the cylindrical structure (24) has a hole (26) in the central region thereof to receive the spindle (14).

3. The bidirectional torque wrench tool (10) according to claim 1, **characterized in that** the spindle (14) is formed by a hexagonal end (30) and a cylindrical end (32) with horizontal splines.

4. The bidirectional torque wrench tool (10) according to claim 3, **characterized in that** the spindle (14) can be driven by the hydraulic drive assembly (20) or directly by means of the hexagonal end (30) thereof.

5. The bidirectional torque wrench tool (10) according to claim 1, **characterized in that** the anti-rotation plate (16) is positioned so as to block the rotation of the spindle (14), when the tool is configured for hydraulic drive.

6. The bidirectional torque wrench tool (10) according to claim 1, **characterized in that** the anti-rotation plate (16) is positioned so as to release the rotation of the spindle (14), when the tool is configured for direct drive.

7. The bidirectional torque wrench tool (10) according to claim 1, **characterized in that** the rotating assembly (18) comprises:
a cogwheel (50); and
a splined sleeve (52),
wherein the splined sleeve (52) is coupled to the cogwheel (50) to receive the cylindrical end (32) of the spindle (14).

8. The bidirectional torque wrench tool (10) according to claim 1, **characterized in that** the hydraulic drive assembly (20) comprises:
a main cylinder (60);
an auxiliary cylinder (62); and
a spring (64).

9. The bidirectional torque wrench tool (10) according to claim 1, **characterized in that** the main cylinder (60) is responsible for applying the force necessary to rotate the cogwheel (50).

10. The bidirectional torque wrench tool (10) according to claim 1, **characterized in that** the auxiliary cylinder (62) is responsible for raising the tip of the main cylinder (60) to initiate a new torque application cycle.

11. The bidirectional torque wrench tool (10) according to claim 10, **characterized in that** the main cylinder (60) and the auxiliary cylinder (62) are driven by a programmable logic controller.
